(19) Europäisches Patentamt
European Patent Office
Office européen des brevets

(11) **EP 3 953 316 B1**

(12) **EUROPEAN PATENT SPECIFICATION**

(45) Date of publication and mention
of the grant of the patent:
**01.01.2025  Bulletin 2025/01**

(21) Application number: **20705225.9**

(22) Date of filing: **24.02.2020**

(51) International Patent Classification (IPC):
***C04B 28/04*** (2006.01)     ***C04B 14/48*** (2006.01)

(52) Cooperative Patent Classification (CPC):
(C-Sets available)
**C04B 14/48; C04B 28/04;** C04B 2103/0077
(Cont.)

(86) International application number:
**PCT/EP2020/054721**

(87) International publication number:
**WO 2020/207652 (15.10.2020 Gazette 2020/42)**

(54) **COATED STEEL FIBER FOR REINFORCEMENT OF A CEMENTITIOUS MATRIX**

BESCHICHTETE STAHLFASER ZUR VERSTÄRKUNG EINER ZEMENTMATRIX

FIBRE D'ACIER REVÊTUE POUR LE RENFORCEMENT D'UNE MATRICE CIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2019  EP 19169011**

(43) Date of publication of application:
**16.02.2022  Bulletin 2022/07**

(73) Proprietor: **NV Bekaert SA
8550 Zwevegem (BE)**

(72) Inventors:
• **VANHEE, Filiep**
**8870 Izegem (BE)**
• **VANDENBROUCKE, Wouter**
**8550 Zwevegem (BE)**
• **ALLAERT, Bart**
**9800 Deinze (BE)**
• **STOPKA, Jaroslav**
**73534 Stonava (CZ)**

(74) Representative: **Serwas, Harry
NV Bekaert SA
IPD - PC6030
Bekaertstraat 2
8550 Zwevegem (BE)**

(56) References cited:
**WO-A1-2006/067095     WO-A1-97/42352**

Remarks:
The file contains technical information submitted after the application was filed and not included in this specification

(52) Cooperative Patent Classification (CPC): (Cont.)

C-Sets
**C04B 14/48, C04B 20/0012, C04B 20/1062;**
**C04B 28/04, C04B 14/06, C04B 14/28, C04B 14/48**

## Description

### Technical Field

The invention relates to a coated steel fiber for the reinforcement of a cementitious matrix.

### Background Art

Steel fibers are known to reinforce a cementitious matrix such as concrete or mortar.

Due to the alkaline nature of concrete or mortar, corrosion protection of these steel fibers is not required in many cases. In some other cases, however, where steel fibers are close to the surface of the reinforced cementitious matrix or where the steel fibers are exposed to weather conditions before being mixed in the cementitious matrix, there may be a problem of corrosion.

WO-A1-2006/067095 discloses zinc coated metal elements such as zinc coated steel fibers for the reinforcement of a cementitious matrix. In order to inhibit the evolution of hydrogen gas, a compound selected from the group of the imidazoles, the triazoles and the tetrazoles is present at the interface of the zinc coated metal elements and the cementitious matrix.

Despite the presence of the zinc coating on the steel fibers, some of the zinc coated steel fibers show some rusty aspect at the surface. This rust is an indication of degradation of the zinc coating. The zinc coating becomes brittle and is flaking, which is detrimental when it comes to provide the steel fibers with cold worked anchorages at their ends. In addition, a brittle zinc coating has a limited life time and decreased protection against corrosion.

### Disclosure of Invention

It is a general object of the invention to avoid the drawbacks of the prior art.

It is particular object of the invention to avoid rust formation on the surface of coated steel fibers.

It is a further object of the invention to provide the steel fibers with a coating that has a good compatibility with a cementitious matrix.

It is still another object of the invention to provide the steel fibers with a coating with acceptable adhesion and with acceptable centricity.

According to the invention, there is provided a steel fiber for the reinforcement of a cementitious matrix, the steel fiber is provided with a zinc aluminium alloy coating, where the amount of aluminium in the coating ranges from 0.05 wt% to 0.5 wt%, e.g. from 0.10wt% to 0.50wt%, the remainder of the coating being zinc and unavoidable impurities, the steel fiber has a steel core, a zinc aluminum alloy coating and intermetallic layer with Fe2Al5 between the steel core and the zinc aluminium coating. The thcikness of the intermetallic layer is smaller than 1 micrometer, e.g. smaller than 0.5 micrometer, e.g. smaller than 0.25 micrometer.

Preferably, the steel fiber with the coating is end drawn, which means that the coating is applied to a steel wire with a thick, intermediate diameter. Thereafter the thus coated steel wire is drawn until its final diameter.

With a standard zinc coating (only zinc and unavoidable impurities), iron diffuses into the coating when the steel wire or the steel fiber is heated. This heating may occur over the entire steel wire or only locally, at limited spots. The heating may be a consequence of inadequate cooling during the drawing operation or of a heat treatment applied to the zinc coated steel wire or steel fiber.

With a zinc aluminium alloy coating where aluminium ranges from 0.05 wt% to 0.50 wt%, a very thin intermetallic layer $Fe_2Al_5$ is formed, which delays the iron diffusion. The temperature at which iron diffuses into zinc has increased from 420 °C to 600 °C.

Contents of aluminium of less than 0.05 wt% do not give the full advantage of the present invention and result in coatings that are more equivalent to standard zinc coatings. Contents of aluminium of greater than 0.5 wt% may lead to reduced drawability since aluminium is a harder element than zinc and contents of aluminium greater than 0.5 wt% may increase the risk for hydrogen formation in a cementitious matrix.

The improved drawability of a steel wire with a zinc aluminium alloy coating where the aluminium content ranges from 0.05 wt% to 0.5 wt% results in higher drawing speeds, or in lower wire fractions or in lower die wear, or in a combination of these factors. Aluminium is a harder element than zinc but in case its content is less than 0.5 wt% the negative effect of aluminium on drawability is minimum.

In some cases a steel wire with a zinc aluminium alloy coating where the aluminium content ranges from 0.05 wt% to 0.5 wt% can even exhibit a drawability that is better than the drawability of a steel wire with a pure zinc coating. This is particularly the case for low coating weights. With low coating weights and with poor centricity of the coating the relatively thick zinc steel alloy layer in case of a pure zinc coating has a greater chance of appearing at the surface. This is a very brittle alloy layer and its appearance at the surface will increase the risk for wire fractures. With a zinc aluminium alloy coating where the aluminium content ranges from 0.05 wt% to 0.5 wt%, the alloy layer is very thin and the chance that it appears at the surface is much less even in case of poor centricity of the coating.

The zinc aluminium alloy coating is present on the steel fiber in amounts that are preferably greater than 25 g/m$^2$, e.g. greater than 30 g/m$^2$. If the coating weight is lower than 25 g/m$^2$, the corrosion resistance may not be adequate enough.

The steel fiber preferably has a length over diameter ratio LID ranging from 40 to 100. In case the LID ratio is less than 40, the reinforcing effect of the steel fibers is not enough. In case the LID ratio of the steel fibers is greater than 100, the risk for problems when mixing the steel fibers in concrete becomes great. Typical fiber diameters range from 0.40 mm to 1.20 mm, e.g. from 0.50 mm to 1.10 mm. Typical fiber lengths range from 25 mm to 100 mm, e.g. from 30 mm to 80 mm.

The steel fiber may have a low carbon or preferably a high carbon steel composition.

In case of a high carbon steel composition, the steel fiber preferably has a tensile strength above 1000 MPa, e.g. above 1350 MPa, e.g. above 1400 MPa, e.g. above 1600 MPa.

The steel fiber is preferably provided with anchorages that are formed by cold deformations. Examples of these anchorages are undulations, bendings, changes in cross-section in general and nail heads in particular.

In a particular preferable embodiment of the invention, the steel fiber has a middle portion between the anchorages and the middle portion has an elongation at maximum load $A_{g+e}$ that is greater than 4%, e.g. greater than 5%. This elongation at maximum load $A_{g+e}$ can be measured by means of a standard load elongation test.

In order to give the steel fibre its high elongation at fracture and at maximum load, the thus drawn wire may be subjected to a stress-relieving treatment, e.g. by passing the wire through a high-frequency or mid-frequency induction coil of a length that is adapted to the speed of the passing wire. It has been observed that a thermal treatment at a temperature of about 300 °C for a certain period of time results in a reduction of the tensile strength of about 10% without increasing the elongation at fracture and the elongation at maximum load. By slightly increasing the temperature, however, to more than 400 °C, a further decrease of the tensile strength is observed and at the same time an increase in the elongation at fracture and an increase in the elongation at maximum load.

In order to improve the mixability into a cementitious matrix and to avoid balling, the steel fibers may be present in the form of a bundle that is bound together by means of a water solvable glue where imidazoles, triazoles and / or the tetrazoles are present in the glue.

The steel fibers according to the present invention are adapted to reinforce all types of cementitious matrices, such as cement, mortar or high-performance concrete.

The steel fibers according to the present invention, are particularly suited to reinforce a normal strength concrete, i.e. a concrete having a strength less than or equal to the strength of concrete of the C100/115 strength classes as defined in EN206. High-performance concrete has a strength that is higher than the strength of concrete of the C100/115 strength class.

The steel fibers according to the present invention are particularly suited for reinforcing precast concrete elements.

Typical dosages to reinforce normal strength concrete range from 20 kg/m$^3$ to 40 kg/m$^3$. Typical dosages to reinforce high-performance concrete may range from above 75 kg/m$^3$ to 300 kg/m$^3$ and more.

**Mode(s) for Carrying Out the Invention**

A steel fiber according to the present invention may be manufactured along following lines.

Starting product is a steel wire rod with a diameter of 5.5 mm or 6.5 mm and with following steel composition: A minimum carbon content of 0.35wt%, a manganese content ranging from 0.40wt% to 0.70wt%, a silicon content ranging from 0.15wt% to 0.30wt%, a maximum sulfur content of 0.05wt%, a maximum phosphorus content of 0.05wt%. Possible minor amounts of chromium, nickel or copper may be present up to 0.20 wt%.

The steel wire rod is dry drawn until a half product steel wire with an intermediate diameter ranging between 1.5 mm and 3.5 mm.

The thus drawn steel wire is provided with a metallic coating of a zinc aluminium alloy with 0.2 wt% aluminium in the coating. This coating operation is preferably done by means of a hot dip process where the steel wire goes through a bath of the molten zinc aluminium alloy. The coating weight on the half product steel wire ranges from 70 g/m$^2$ to 200 g/m$^2$.

The thus coated half product steel wire is then dry drawn until a steel wire with a diameter below 1.0 mm. The coating weight on the final steel wire is higher than 20 g/m$^2$, preferably higher than 30 g/m$^2$. The tensile strength of the drawn steel wire may range from 1200 MPa to 2700 MPa, mainly depending upon the final reduction and the carbon content in the steel composition. The surface of the steel wire does not show any rust or colouring departing from the normal appearance of a zinc alloy coating.

Analysis by means of an optical microscope shows the presence of a very thin intermetallic $Fe_2Al_5$ layer with a thickness ranging from 50 nm (nanometer) to 150 nm.

A classical wrapping test carried out on the steel wire shows no flaking of the zinc alloy coating, which means that the adhesion is good, despite the very thin intermetallic layer.

Measurement of coating centricity has resulted in values ranging from 5% to 30%, which are rather low values but still within an acceptable range. These lower values were expected since it is generally known that absence of intermetallic layers or very thin intermetallic layers have a negative influence on centricity particularly with low coating weights around 30 kg/m$^2$.

A stress relieving treatment at a temperature in the range of 420 °C to 450 °C is applied to the steel wire during a couple of seconds, in order to increase the elongation at maximum load $A_{g+e}$ to more than 4%, e.g. more than 5 %. This stress-relieving temperature is higher than in case of a pure zinc coating (only 400 °C - 410 °C). Despite this higher temperature, no brown rust spots are noticed on the surface of the steel wire with the Zn0.2Al coating when exposed to a corrosive environment.

This is in contrast to a steel wire with a pure zinc coating. In the case of a pure zinc coating, the iron zinc alloy layer quickly grows during stress relieving, even up to the surface of the coating. So iron is present in the top layers of the zinc coating. After short exposure in a corrosive environment, brown rust stains are appearing, despite the abundant presence of zinc and despite the galvanic protection.

The coated and stress-relieved steel wire is then cut and bent to result in several steel fibers provided with bendings at the end. Examples of anchorages in the forms of bendings are disclosed in US-A-3,900,667, EP-B1-0 851 957, EP-B1-2 652 221, and EP-B1-2 652 222.

Before being cut and bent, the steel wires may be bound together by means of a water solvable glue in order to form a strip according to US-A-4,284,667. According to the teaching of WO-A1-2006/067095, Benzimidazole is added to the glue in order to prevent evolution of hydrogen gas.

**Three Point Bending Test**

In order to check the compatibility of the newly coated steel fibers according to the invention with concrete, standard three point bending tests have been carried out according to norm EN14651. Beams with dimensions 150 mm x 150 mm x 600 mm and made of C35/45 concrete have been reinforced with steel fibers having a zinc 0.2 wt% aluminium coating and provided with bendings according to EP-B1-2 652 222. Tests have been done for three different dosages of steel fibers.

Following parameters have been calculated:

$$\text{limit of proportionality } f_L = 3/2 \times F_L \times \ell \,/\, (bxh^2)$$

with $F_L$ = maximum load between 0 and 0.05 mm deflection

residual flexural strength $f_{R,1}$

    CMOD = 0.5 mm
    deflection = 0.47 mm

residual flexural strength $f_{R,2}$

    CMOD = 1.5 mm
    deflection = 1.32 mm

residual flexural strength $f_{R,3}$

    CMOD = 2.5 mm
    deflection = 2.17 mm

residual flexural strength $f_{R,4}$

    CMOD = 3.5 mm
    deflection = 3.02 mm

$$f_{R,i} = 3/2 \times F_{R,i} \times \ell \,/\, (bxh^2)$$

with $F_{R,i}$ = load at the corresponding CMOD or deflection

The table hereunder summarizes the results. The mentioned values are average values of five to six tests.

### Table

| Dosage (kg/m$^3$) | $f_L$ (N/mm$^2$) | $f_{R,1}$ (N/mm$^2$) | $f_{R,2}$ (N/mm$^2$) | $f_{R,3}$ (N/mm$^2$) | $f_{R,4}$ (N/mm$^2$) |
|---|---|---|---|---|---|
| 20 | 5.54 | 2.80 | 3.54 | 3.88 | 3.79 |
| 30 | 5.69 | 5.07 | 5.99 | 5.81 | 5.56 |
| 40 | 5.58 | 4.69 | 5.87 | 6.03 | 6.12 |

The above results have been compared with results obtained from steel fibers with same geometry and composition but with a standard 100% zinc coating. Some differences are noticed but these differences are within the acceptable standard range.

**Passivation Test**

Thin test plates with following standard concrete composition have been made:

- 400 kg/m$^3$ of CEM 145.5 R HES;
- 1200 kg/m$^3$ of river sand 0/4;
- 200 kg/m$^3$ of crushed limestone 4/7.

Three test plates have been made with varying coating thicknesses: 28 g/m$^2$, 33 g/m$^2$ and 40 g/m$^2$.

A number of invention steel fibers are placed at the bottom of each mold before filling it with concrete. The samples are vibrated for 30 seconds and cured in a humid environment before demolding. After a curing time, the bottom of each sample is inspected.

None of the test plates showed formation of hydrogen.

**Claims**

1. A steel fiber adapted for the reinforcement of a cementitious matrix,

    said steel fiber being provided with a zinc aluminium alloy coating,
    the amount of aluminium in the coating ranging from 0.05 wt% to 0.5 wt%,
    the remainder of the coating being zinc and unavoidable impurities, wherein said steel fiber having a steel core, a zinc aluminium alloy coating and an intermetallic layer with $Fe_2Al_5$ between said steel core and said zinc aluminium coating, said intermetallic layer having a thickness being smaller than 1 micrometer.

2. The steel fiber of claim 1,
    wherein said steel fiber with the coating is end drawn.

3. The steel fiber according to any one of the preceding claims,
    wherein said zinc aluminium alloy coating is present in amounts above 25 g/m$^2$.

4. The steel fiber according to any one of the preceding claims,
    wherein said steel fiber has a length over diameter ratio LID ranging from 40 to 100.

5. The steel fiber according to any one of the preceding claims,
    wherein said steel fiber is provided with anchorages formed by cold deformations such as undulations, bendings, nail heads.

6. The steel fiber according to claim 5,

    said steel fiber having a middle portion between said anchorages,
    said middle portion having an elongation at maximum load $A_{g+e}$ being greater than 4%.

7. A bundle of steel fibers according to any one of the preceding claims,
said bundle of steel fibers being glued together by means of a water solvable glue, imidazoles, triazoles or tetrazoles being present in said glue.

**Patentansprüche**

1. Stahlfaser, ausgelegt zur Verstärkung einer zementhaltigen Matrix,

   wobei die Stahlfaser mit einer Zink-Aluminium-Legierung-Beschichtung versehen ist,
   wobei die Menge an Aluminium in der Beschichtung in dem Bereich von 0,05 Gew.-% bis 0,5 Gew.-% liegt,
   wobei der Rest der Beschichtung Zink und unvermeidbare Verunreinigungen ist, wobei die Stahlfaser einen Stahlkern, eine Zink-Aluminium-Legierung-Beschichtung und eine intermetallische Schicht mit $Fe_2Al_5$ zwischen dem Stahlkern und der Zink-Aluminium-Beschichtung aufweist, wobei die intermetallische Schicht eine Dicke von kleiner als 1 Mikrometer aufweist.

2. Stahlfaser gemäß Anspruch 1,
   wobei die Stahlfaser mit der Beschichtung endgezogen ist.

3. Stahlfaser gemäß einem der vorstehenden Ansprüche,
   wobei die Zink-Aluminium-Legierung-Beschichtung in Mengen von über 25 g/m$^2$ vorhanden ist.

4. Stahlfaser gemäß einem der vorstehenden Ansprüche,
   wobei die Stahlfaser ein Verhältnis von Länge zu Durchmesser L/D in dem Bereich von 40 bis 100 aufweist.

5. Stahlfaser gemäß einem der vorstehenden Ansprüche,
   wobei die Stahlfaser mit durch Kaltverformung gebildeten Verankerungen, wie z.B. Wellen, Biegungen, Nagelköpfen, versehen ist.

6. Stahlfaser gemäß Anspruch 5,

   wobei die Stahlfaser einen mittleren Teil zwischen den Verankerungen aufweist,
   wobei der mittlere Teil eine Dehnung bei Höchstlast $A_{g+e}$ von höher als 4 % aufweist.

7. Bündel von Stahlfasern gemäß einem der vorstehenden Ansprüche,
   wobei das Bündel von Stahlfasern mithilfe eines wasserlöslichen Klebstoffs zusammengeklebt ist, wobei Imidazole, Triazole oder Tetrazole in dem Klebstoff vorhanden sind.

**Revendications**

1. Fibre d'acier conçue pour le renforcement d'une matrice cimentaire, ladite fibre d'acier étant munie d'un revêtement d'alliage de zinc et d'aluminium, la quantité d'aluminium dans le revêtement se situant dans la plage de 0,05 % en poids à 0,5 % en poids, le reste du revêtement étant du zinc et des impuretés inévitables, ladite fibre d'acier ayant un noyau d'acier, un revêtement d'alliage de zinc et d'aluminium et une couche intermétallique comportant du $Fe_2Al_5$ entre ledit noyau d'acier et ledit revêtement de zinc et d'aluminium, ladite couche intermétallique ayant une épaisseur qui est plus petite que 1 micromètre.

2. Fibre d'acier selon la revendication 1, ladite fibre d'acier comportant le revêtement étant tirée à l'extrémité.

3. Fibre d'acier selon l'une quelconque des revendications précédentes, ledit revêtement d'alliage de zinc et d'aluminium étant présent en des quantités supérieures à 25 g/m$^2$.

4. Fibre d'acier selon l'une quelconque des revendications précédentes, ladite fibre d'acier ayant un rapport de longueur sur diamètre L/D se situant dans la plage de 40 à 100.

5. Fibre d'acier selon l'une quelconque des revendications précédentes, ladite fibre d'acier étant munie d'ancrages formés par des déformations à froid telles que des ondulations, des pliages, des têtes de clou.

**6.** Fibre d'acier selon la revendication 5, ladite fibre d'acier ayant une partie centrale entre lesdits ancrages, ladite partie centrale ayant une élongation à charge maximale $A_{g+e}$ qui est supérieure à 4 %.

**7.** Paquet de fibres d'acier selon l'une quelconque des revendications précédentes, ledit paquet de fibres d'acier étant collé ensemble au moyen d'une colle, d'imidazoles, de triazoles ou de tétrazoles pouvant être dissoute/dissous dans l'eau qui est/sont présente/présents dans la colle.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006067095 A1
- US 3900667 A
- EP 0851957 B1
- EP 2652221 B1
- EP 2652222 B1
- US 4284667 A